# EUROPÄISCHE PATENTSCHRIFT

(11) **EP 3 404 380 B1**
(45) Veröffentlichungstag und Bekanntmachung des Hinweises auf die Patenterteilung: **15.07.2020**
(21) Anmeldenummer: 18165585.3
(22) Anmeldetag: 04.04.2018
(51) Int. Cl.: G01J 3/02, G01J 3/26, G01J 3/28, G02B 26/00

(54) **VERFAHREN UND VORRICHTUNG ZUM KALIBRIEREN EINES MIKROSPEKTROMETERMODULS**
METHOD AND DEVICE FOR CALIBRATION OF A MICROSPECTROMETER MODULE
PROCÉDÉ ET DISPOSITIF D'ÉTALONNAGE D'UN MODULE DE MICROSPECTROMÈTRE

(30) Priorität: 28.04.2017 DE 102017207186
(43) Veröffentlichungstag der Anmeldung: 21.11.2018
(73) Patentinhaber: Robert Bosch GmbH, 70442 Stuttgart (DE)
(72) Erfinder: Hermersdorf, Marion, 72770 Reutlingen (DE); Noltemeyer, Ralf, 71083 Herrenberg (DE); Husnik, Martin, 70176 Stuttgart (DE); Michel, Florian, 85665 Moosach (DE); Stein, Benedikt, 70193 Stuttgart (DE); Schelling, Christoph, 70619 Stuttgart (DE)

(56) Entgegenhaltungen:
- EP-A1- 2 816 389
- WO-A1-96/21140
- US-A- 5 561 523

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Herkömmliche mikromechanische Fabry-Perot-Interferometer bestehen in der Regel aus zwei Spiegelelementen, die auf einem Substrat über einem Durchgangsloch angeordnet sind, wie beispielsweise in der US 5561523 gezeigt. Daneben sind Interferometer bekannt, die aus zwei Substraten mit Durchgangslöchern konstruiert sind, wie etwa in der US 6721098 gezeigt. Dabei wird ein Lichtstrahl vertikal durch eine Sandwichbauform mit zwei hochreflektierenden Spiegeln geleitet, wobei jeweils schmalbandige Bereiche um eine Resonanzwellenlänge und deren Obertöne in Abhängigkeit vom Abstand der beiden Spiegel transmittiert werden. Durch Variation des Abstandes kann die gewünschte Resonanzwellenlänge eingestellt, in einem nachfolgenden Detektor gemessen und so seriell ein Spektrum aufgenommen werden. Ein zusätzlicher sich davor befindender Bandpassfilter kann beispielsweise die gewünschte Ordnung herausfiltern, sodass Fehler durch andere Ordnungen unterdrückt werden.

Spektrometer dieser Bauart können fertigungsbedingt eine starke Abhängigkeit von Fertigungstoleranzen aufweisen und empfindlich gegenüber Umweltbedingungen und Alterung sein. Wellenlängenverschiebungen und Intensitätsabweichungen können beispielsweise unabhängig voneinander im Fertigungswerk abgeglichen werden, um die Fertigungstoleranzen auszugleichen.

Während des Betriebs kann beispielsweise durch ein zusätzliches Bauteil, bestehend etwa aus aus Spektralon oder Teflon, ein relativer Intensitätsabgleich durchgeführt werden, um Umwelteinflüsse auf Optik oder Elektronik zu korrigieren. Dabei wird in der Regel keine Wellenlängenverschiebungskorrektur durchgeführt.

Die Druckschrift EP 2 816 389 A1 offenbart einen Spiegel für ein Fabry-Perot-Interferometer und ein Verfahren zur Herstellung desselben.

Die Druckschrift US 5 561 523 A offenbart ein elektrisch verstellbares Fabry-Perot-Interferometer, welches durch Oberflächen-mikromechanische Verfahren zur Verwendung in einer optischen Materialanalyse hergestellt wurde.

Die Druckschrift WO 96/21140 A1 offenbart einen Fabry-Perot-Mikrofilterdetektor.

### Offenbarung der Erfindung

Vor diesem Hintergrund werden mit dem hier vorgestellten Ansatz ein Verfahren zum Kalibrieren eines Mikrospektrometermoduls gemäß Anspruch 1, eine Vorrichtung, die dieses Verfahren verwendet nach Anspruch 8, sowie schließlich ein entsprechendes Computerprogramm gemäß Anspruch 9 vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Unter einem Mikrospektrometermodul kann ein miniaturisiertes Modul zur Analyse der spektralen Zusammensetzung von Licht mittels eines optischen Resonators verstanden werden. Bei dem optischen Resonator kann es sich beispielsweise um einen Fabry-Perot-Resonator bestehend aus zwei einander gegenüberliegend und zueinander beabstandet angeordneten teildurchlässigen Spiegelelementen handeln. Der Spiegelabstand, auch Kavitätslänge oder -distanz genannt, kann beispielsweise mittels eines geeigneten Spiegelaktors variierbar sein, um zu detektierende Resonanzwellenlängen einzustellen.

Unter einem Durchlassbereich des optischen Resonators kann ein Frequenzbereich verstanden werden, innerhalb dessen der optische Resonator die in einem Signal enthaltenen Frequenzen passieren lässt. Unter einem Durchlassbereich des Bandpassfilters kann ein durch eine untere Grenzfrequenz und eine obere Grenzfrequenz begrenztes Frequenzband, auch Bandpassbereich genannt, verstanden werden, innerhalb dessen der Bandpassfilter für Signale durchlässig ist. Frequenzanteile der Signale, die sich außerhalb des Frequenzbandes befinden, werden dabei abgeschwächt oder gesperrt.

Unter einer Grenze des Durchlassbereichs des Bandpassfilters kann beispielsweise die obere oder untere Grenzfrequenz des Bandpassfilters oder ein schmalbandiger Bereich um die obere oder untere Grenzfrequenz des Bandpassfilters verstanden werden. Unter einem Detektor kann ein optischer Sensor wie beispielsweise eine Fotodiode, ein Fototransistor oder ein CCD- oder CMOS-Sensor verstanden werden. Je nach Ausführungsform kann es sich bei dem Detektor etwa um ein Detektorarray aus einer Mehrzahl von Detektorelementen wie beispielsweise Fotodioden oder um einen Einzeldetektor handeln. Unter einem Transmissionsspektrum kann ein von dem optischen Resonator transmittiertes elektromagnetisches Spektrum verstanden werden. Unter einem Referenzspektrum kann beispielsweise ein Spektrum verstanden werden, das den Durchlassbereich des Bandpassfilters, ein Spektrum mit bekannten Absorptionsbanden, etwa ein Sonnenlichtspektrum oder ein Spektrum einer künstlichen Lichtquelle, oder ein bei einer vorangehenden Referenzmessung unter Verwendung eines zu analysierenden Objekts mit bekanntem spektralem Verhalten ermitteltes Spektrum repräsentiert.

Beispielsweise kann im Schritt des Auswertens ein Wellenlängenverschiebungsfehler des Mikrospektrometermoduls durch Kalibrierung von Messsignalen eines Abstandssensors zum Messen des Spiegelabstands oder eines Stroms oder einer Spannung zum Ansteuern des Spiegelaktors kalibriert werden.

Der hier vorgestellte Ansatz beruht auf der Erkenntnis, dass die Kalibrierung eines Fabry-Perot-Spektrometer-Systems unter Verwendung unterschiedlicher Resonanzwellenlängenordnungen und Bandpassfilterflanken durchgeführt werden kann. Dazu kann beispielsweise ein System aus Fabry-Perot-Interferometer, Bandpass und Einzeldetektor verwendet werden. Das Fabry-Perot-Interferometer wird dabei über den Bandpassbereich hinaus gefahren. So können unterschiedliche Ordnungen detektiert werden. Unter Verwendung der unterschiedlichen Ordnungen kann etwa ein Empfindlichkeitsabgleich durchgeführt werden. Die Detektion kann mittels eines Einzeldetektors vorgenommen werden. Somit wird während des Betriebs eine Kalibrierung von Intensität und Wellenlängenverschiebung ohne zusätzliches externes Spektrometerbauteil ermöglicht.

Das Mikrospektrometermodul kann beispielsweise einen Abstandssensor zum Messen des Spiegelabstands aufweisen. Gemäß einer Ausführungsform kann im Schritt des Auswertens das Transmissionsspektrum unter Verwendung eines von dem Abstandssensor beim Ansteuern gemessenen Spiegelabstands ausgewertet werden. Dadurch können fertigungsbedingte Messfehler des Abstandssensors ausgeglichen werden.

Das Mikrospektrometermodul kann zudem eine Lichtquelle zum Beleuchten eines zu analysierenden Objekts mit Licht in einem Kalibrierungswellenlängenbereich aufweisen. Gemäß einer Ausführungsform kann im Schritt des Ansteuerns die Lichtquelle angesteuert werden, um das Objekt zu beleuchten. Dabei kann im Schritt des Auswertens das Transmissionsspektrum unter Verwendung des Kalibrierungswellenlängenbereiches ausgewertet werden. Unter einem Kalibrierungswellenlängenbereich kann ein bekanntes Emissionsspektrum der Lichtquelle verstanden werden. Dadurch kann die Kalibrierung des Mikrospektrometermoduls unter kontrollierten Beleuchtungsverhältnissen durchgeführt werden. Somit kann die Zuverlässigkeit der Kalibrierung erhöht werden.

Es ist ferner von Vorteil, wenn im Schritt des Auswertens das Referenzspektrum den Durchlassbereich des Bandpassfilters oder, zusätzlich oder alternativ, ein Spektrum mit bekannten Absorptionsbanden, insbesondere ein Sonnenlichtspektrum, oder, zusätzlich oder alternativ, ein bei einer vorangehenden Referenzmessung unter Verwendung eines zu analysierenden Objekts mit bekanntem spektralem Verhalten ermitteltes Spektrum repräsentiert. Dadurch kann eine effiziente Kalibrierung gewährleistet werden.

Das Mikrospektrometermodul kann optional einen Temperatursensor aufweisen. Gemäß einer Ausführungsform kann im Schritt des Auswertens das Transmissionsspektrum unter Verwendung einer von dem Temperatursensor beim Ansteuern gemessenen Temperatur ausgewertet werden. Dadurch können Temperatureinflüsse bei der Kalibrierung berücksichtigt werden.

Das Weiteren kann im Schritt des Auswertens das Transmissionsspektrum unter Verwendung von zumindest zwei durch das Referenzspektrum vorgegebenen Kalibrierungspunkten ausgewertet werden. Beispielsweise kann es sich bei den Kalibrierungspunkten um Messpunkte eines Dunkelstroms, um Filterkanten des Bandpassfilters repräsentierende Punkte oder um charakteristische Punkte in einem Spektrum mit bekannten Absorptionsbanden handeln. Durch diese Ausführungsform wird eine schnelle und zuverlässige Kalibrierung mithilfe weniger Kalibrierungspunkte ermöglicht.

Gemäß einer weiteren Ausführungsform kann im Schritt des Ansteuerns der Durchlassbereich des Bandpassfilters kleiner oder gleich einem Wellenlängenabstand zwischen zwei unterschiedlichen Ordnungen einer zu detektierenden Resonanzwellenlänge des optischen Resonators sein. Zusätzlich oder alternativ kann der optische Resonator im Schritt des Ansteuerns derart angesteuert werden, dass der optische Resonator Resonanzwellenlängen unterschiedlicher Ordnungen durchlässt. Die Verwendung unterschiedlicher Ordnungen ermöglicht beispielsweise die Durchführung eines Empfindlichkeitsabgleiches ohne zusätzliche Bauteile.

Von Vorteil ist auch, wenn im Schritt des Ansteuerns der optische Resonator angesteuert wird, um den Durchlassbereich des optischen Resonators über eine obere Grenze und eine untere Grenze des Durchlassbereichs des Bandpassfilters hinaus zu verschieben. Dadurch kann die Genauigkeit der Kalibrierung erhöht werden.

Das Verfahren kann gemäß einer weiteren Ausführungsform einen Schritt des Empfangens von Objekterkennungsdaten oder, zusätzlich oder alternativ, von Weißabgleichsdaten über eine Schnittstelle zu einer Kamera zum Aufnehmen von Bildern des zu analysierenden Objekts umfassen. Dementsprechend kann im Schritt des Auswertens das Transmissionsspektrum unter Verwendung der Objekterkennungsdaten oder der Weißabgleichsdaten ausgewertet werden. Durch diese Ausführungsform kann die Genauigkeit der Kalibrierung weiter erhöht werden.

Dieses Verfahren kann beispielsweise in Software oder Hardware oder in einer Mischform aus Software und Hardware, beispielsweise in einem Steuergerät, implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
- Fig. 1: eine schematische Darstellung eines Mikrospektrometermoduls und einer Vorrichtung gemäß einem Ausführungsbeispiel;
- Fig. 2: eine schematische Darstellung einer Vorrichtung aus Fig. 1;
- Fig. 3: ein Ablaufdiagramm eines Verfahrens gemäß einem Ausführungsbeispiel;
- Fig. 4: Diagramme zur Darstellung eines Konzepts zur Erzeugung eines normierten Spektrums auf Basis von Einflüssen durch Komponenten eines Mikrospektrometermoduls;
- Fig. 5: ein Diagramm aus Fig. 4;
- Fig. 6: ein Diagramm zur Darstellung von Rohspektrumkalibrierungspositionen zur Verwendung in einem Verfahren gemäß einem Ausführungsbeispiel; und
- Fig. 7: ein Diagramm zur Darstellung einer Rohspektrumkalibrierung in einem Verfahren gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

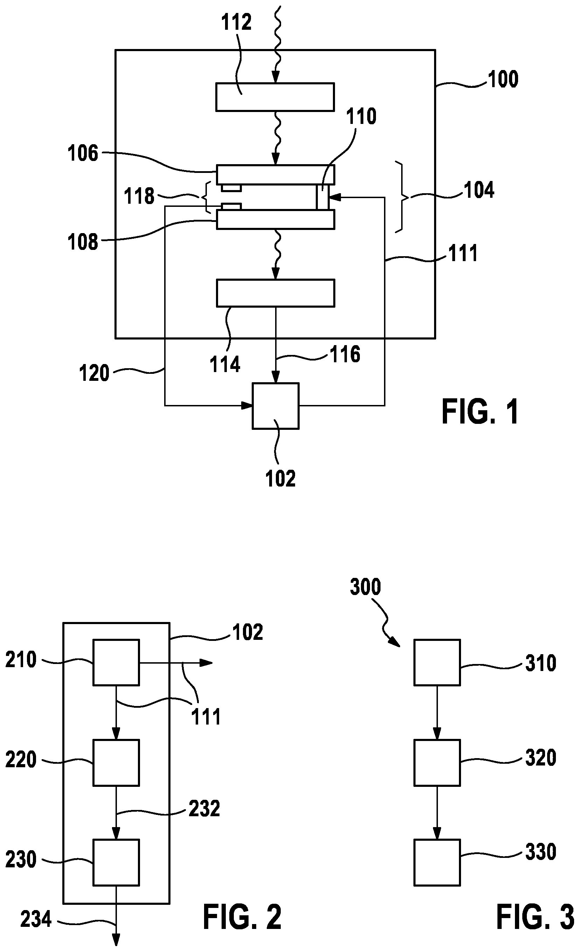

Fig. 1 zeigt eine schematische Darstellung eines Mikrospektrometermoduls 100 und einer Vorrichtung 102 gemäß einem Ausführungsbeispiel. Das Mikrospektrometermodul 100 umfasst gemäß diesem Ausführungsbeispiel einen optischen Resonator 104 in Form eines Fabry-Perot-Interferometers bestehend aus zwei teildurchlässigen Spiegelelementen 106, 108, deren gegenseitiger Abstand, auch Spiegelabstand oder Kavitätslänge oder -distanz genannt, mittels eines Aktors 110 zur Einstellung unterschiedlicher Resonanzwellenlängen variierbar ist. Die Ansteuerung des Aktors 110 erfolgt mittels eines entsprechenden Ansteuersignals 111, das von der Vorrichtung 102 erzeugt und ausgegeben wird. Dem optischen Resonator 104 ist ein Bandpassfilter 112 zum Vorfiltern eines von dem optischen Resonator 104 zu filternden Wellenlängenbereichs, etwa zum Durchlassen einer Ordnung n, vorgeschaltet. In das Mikrospektrometermodul 100 einfallende oder darin gefilterte Lichtstrahlen sind schematisch mit welligen Pfeilen markiert. Das Weiteren weist das Mikrospektrometermodul 100 einen Detektor 114, beispielsweise einen Einzeldetektor, auf, der dem optischen Resonator 104 nachgeschaltet ist und ausgebildet ist, um eine Intensität des von dem optischen Resonator 104 durchgelassenen Lichts zu detektieren und ein die Intensität repräsentierendes Messsignal 116 an die Vorrichtung 102 zu senden. Die Vorrichtung 102 ist ausgebildet, um unter Verwendung des Messsignals 116 und durch entsprechende Variation des Spiegelabstands ein Transmissionsspektrum aufzunehmen.

Gemäß dem hier vorgestellten Ansatz ist die Vorrichtung 102 ausgebildet, um zur Kalibrierung des Mikrospektrometermoduls 100 den Spiegelabstand durch Ansteuern des Aktors 110 mittels des Ansteuersignals 111 derart zu ändern, dass ein Durchlassbereich des optischen Resonators 104, d. h. ein Frequenzbereich, für den der optische Resonator 104 durchlässig ist, über zumindest eine Grenze eines Durchlassbereichs des Bandpassfilters 112 hinaus verschoben ist, wie dies in Fig. 2 näher gezeigt ist. Hierbei ist die Vorrichtung 102 ausgebildet, um den Detektor 114 ansprechend auf das Ansteuern des Aktors 110 auszulesen, um das Transmissionsspektrum bei verschobenem Durchlassbereich des optischen Resonators 104 aufzunehmen. Dieses Transmissionsspektrum wird durch die Vorrichtung 102 unter Verwendung eines geeigneten Referenzspektrums zur Kalibrierung ausgewertet. Abhängig vom Auswerteergebnis erfolgt die Kalibrierung des Mikrospektrometermoduls 100 beispielsweise durch entsprechendes Ändern einer das Ansteuersignal 111 repräsentierenden Spannungs- oder Stromwertes, etwa um einen Wellenlängenverschiebungsfehler auszugleichen.

Der Durchlassbereich des optischen Resonators 104 und der Durchlassbereich des Bandpassfilters 112 repräsentieren insbesondere unterschiedliche Ordnungen von Wellenlängen.

Gemäß einem Ausführungsbeispiel umfasst das Mikrospektrometermodul 100 einen Abstandssensor 118, der ausgebildet ist, um den Spiegelabstand zu messen und ein den Spiegelabstand repräsentierendes Abstandsmesssignal 120 an die Vorrichtung 102 zu senden. Dementsprechend ist die Vorrichtung 102 ausgebildet, um das Transmissionsspektrum zur Kalibrierung des Mikrospektrometermoduls 100 ferner unter Verwendung des Abstandsmesssignals 120 auszuwerten. Insbesondere repräsentiert das Abstandsmesssignal 120 hierbei einen zum Zeitpunkt des Auslesens des Detektors 114 gemessenen Spiegelabstand. Beispielsweise wertet die Vorrichtung 102 das Transmissionsspektrum unter Verwendung des Abstandsmesssignals 120 aus, um fertigungsbedingte Wellenlängenverschiebungen durch eine entsprechende Kalibrierung des Abstandssensors 118 auszugleichen.

Nachfolgend werden verschiedene Ausführungsbeispiele des hier vorgestellten Ansatzes nochmals mit anderen Worten zusammengefasst.

Gemäß einem Ausführungsbeispiel ist eine Wellenlängenbandpassfilterwirkung des Bandpassfilters 112 kleiner oder gleich einem Wellenlängenabstand zwischen zwei unterschiedlichen Ordnungen einer zu messenden Resonanzwellenlänge. Dabei wird die Ansteuerung des optischen Resonators 104 so gesteuert oder geregelt, dass ein größerer Wellenlängenbereich im Vergleich zum Bandpassfilter gefiltert werden kann, sodass Resonanzwellenlängen unterschiedlicher Ordnung detektiert werden können.

Die Kalibrierung des Wellenlängenverschiebungsfehlers erfolgt je nach Ausführungsbeispiel über eine Aktorspannung oder einen Aktorstrom oder Messsignale des Abstandssensors 118 unter Nutzung der jeweiligen Bandpassfilterkanten zum Wellenlängenoffsetabgleich, unter Nutzung der jeweiligen Bandpassfilterkantendifferenz zum Wellenlängenempfindlichkeitsabgleich, unter Nutzung der jeweiligen Resonanzwellendifferenz unterschiedlicher Ordnungen zum Wellenlängenempfindlichkeitsabgleich oder unter Nutzung bekannter natürlicher und künstlicher Lichtquellen mit messbaren Absorptionsbanden oder Absorptionsbandendifferenzen.

Die Kalibrierung der spektralen Intensitätsverteilung des Mikrospektrometermoduls 100 mit Emittermodul, d. h. mit Lichtquelle, erfolgt je nach Ausführungsbeispiel unter Verwendung metallischer Materialien mit diffuser oder direkter Reflexion wie etwa Messer, Metallspiegel oder Münzen oder unter Verwendung von Standardmaterialien wie etwa (Porzellan-)Geschirr oder einer Hautoberfläche. Die Kalibrierung der spektralen Intensitätsverteilung oder der Wellenlängenverschiebung des Mikrospektrometermoduls 100 erfolgt beispielsweise durch Verwendung natürlichen oder künstlichen Lichts wie etwa von Sonnenlicht, Blitzlicht, Halogen- oder Glühlampenlicht. Zusätzlich kann die Kalibrierung in Kombination mit einer gleichzeitigen Kalibrierungsobjekterkennung durch eine Kamera, insbesondere eine Smartphonekamera, oder durch Nutzung von RGB-Weißabgleichsdaten der Kamera durchgeführt werden.

Vorteilhafterweise kann die Wellenlängenverschiebungskalibrierung, d. h. die Kalibrierung von Offset und Empfindlichkeit, ohne zusätzlichen Hardwareaufwand bei jeder Messung durchgeführt werden. Dadurch können günstige, robuste Spektrometersysteme entwickelt und gefertigt werden, zumal ein differenzieller Positionssensor entfallen kann. Das bedeutet, dass nur die Nichtlinearität des Positionssensors sehr robust sein sollte.

Von Vorteil ist auch, dass die Kalibrierung der Intensitätsverteilung ohne Zusatzbauteil durchgeführt werden kann. Durch die Reduzierung der Bauteile können die Stoffkosten des Gesamtsystems reduziert werden.

Eine erste Kalibrierung der Intensität kann beispielsweise schon während der Fertigung des Mikrospektrometermoduls 100 durchgeführt werden. Diese Kalibrierungsparameter sollten beispielsweise angepasst werden, wenn das Mikrospektrometermodul 100 stark verschmutzt oder gealtert ist.

Fig. 2 zeigt eine schematische Darstellung einer Vorrichtung 102 aus Fig. 1. Die Vorrichtung 102 umfasst eine Ansteuereinheit 210 zum Ansteuern des optischen Resonators durch Erzeugen und Ausgeben des Ansteuersignals 111. Eine Ausleseeinheit 220 ist ausgebildet, um den Detektor unter Verwendung des Ansteuersignals 111 zur Aufnahme des Transmissionsspektrums auszulesen. Eine Auswerteeinheit 230 ist ausgebildet, um von der Ausleseeinheit 220 ein das Transmissionsspektrum repräsentierendes Aufnahmesignal 232 zu empfangen und dieses in Kombination mit einem geeigneten Referenzspektrum zur Kalibrierung des Mikrospektrometermoduls auszuwerten. Ein Auswerteergebnis dieser Auswertung ist mit dem Bezugszeichen 234 gekennzeichnet.

Bei dem Referenzspektrum handelt es sich je nach Ausführungsbeispiel etwa um einen Wellenlängenbereich, der den Durchlassbereich des Bandpassfilters, ein Spektrum mit bekannten Absorptionsbanden, etwa ein Sonnenlichtspektrum, oder ein bei einer vorangehenden Referenzmessung unter Verwendung eines zu analysierenden Objekts mit bekanntem spektralem Verhalten ermitteltes Spektrum repräsentiert.

Fig. 3 zeigt ein Ablaufdiagramm eines Verfahrens 300 gemäß einem Ausführungsbeispiel. Das Verfahren 300 zum Kalibrieren eines Mikrospektrometermoduls kann beispielsweise unter Verwendung einer Vorrichtung, wie sie vorangehend anhand der Figuren 1 und 2 beschrieben ist, durchgeführt werden. Dabei wird in einem Schritt 310 der optische Resonator angesteuert, um den Durchlassbereich des optischen Resonators über zumindest eine Grenze des Durchlassbereichs des Bandpassfiltersignals zu verschieben. Ansprechend auf das Ansteuern 310 wird der Detektor in einem Schritt 320 ausgelesen, um das Transmissionsspektrum aufzunehmen. Schließlich erfolgt in einem Schritt 330 die Auswertung des Transmissionsspektrums unter Verwendung des Referenzspektrums, um das Mikrospektrometermodul zu kalibrieren.

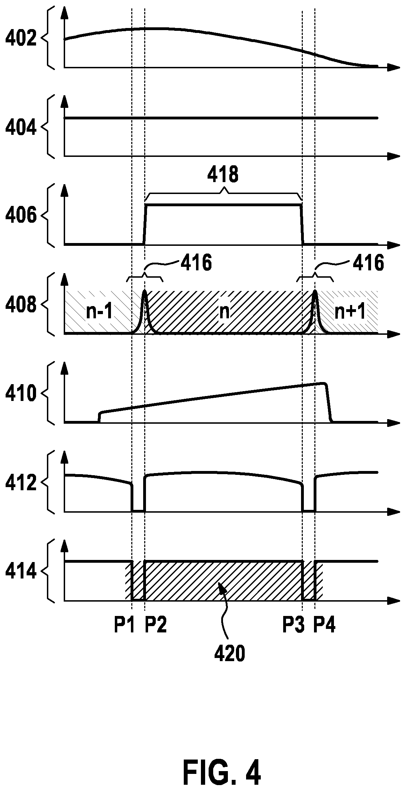

Fig. 4 zeigt übereinander angeordnete Diagramme 402, 404, 406, 408, 410, 412, 414 zur Darstellung eines Konzepts zur Erzeugung eines normierten Spektrums auf Basis von Einflüssen durch Komponenten eines Mikrospektrometermoduls. Das normierte Spektrum wurde beispielsweise unter Verwendung einer vorangehend anhand der Figuren 1 bis 3 beschriebenen Vorrichtung erzeugt. Gezeigt sind ein erstes Diagramm 402 zur Darstellung einer Emitterintensität, ein zweites Diagramm 404 zur Darstellung einer Reflexivität eines Targets, ein drittes Diagramm 406 zur Darstellung einer Transmission des Bandpassfilters, ein viertes Diagramm 408 zur Darstellung einer Transmission des optischen Resonators, ein fünftes Diagramm 410 zur Darstellung einer Empfindlichkeit des Detektors, ein sechstes Diagramm 412 zur Darstellung eines Rohspektrums sowie ein siebtes Diagramm 414 zur Darstellung des normierten Spektrums.

Auf der Abszisse der Diagramme 402 bis 410 ist jeweils eine Wellenlänge λ in nm aufgetragen, während auf der Abszisse der beiden Diagramme 412, 414 jeweils der Spiegelabstand des optischen Resonators aufgetragen ist. Die Ordinate aller sieben Diagramme repräsentiert jeweils eine Intensität.

Aus dem dritten Diagramm 406 und dem vierten Diagramm 408 ist ersichtlich, dass der Durchlassbereich 416 des optischen Resonators über eine der beiden Grenzen des Durchlassbereichs 418 des Bandpassfilters, hier beispielhaft über eine Filterflanke, die eine obere Grenzfrequenz des Bandpassfilters repräsentiert, hinaus verschoben ist. Dabei repräsentiert beispielsweise der Durchlassbereich 418 des Bandpassfilters eine Ordnung n, während der Durchlassbereich 416 des optischen Resonators eine Ordnung n+1, also eine von der Ordnung des Bandpassfilters abweichende Ordnung, repräsentiert. Alternativ oder zusätzlich repräsentiert der Durchlassbereich 416 des optischen Resonators eine Ordnung n-1, wobei der Durchlassbereich 416 über eine untere Grenzfrequenz des Durchlassbereichs 418 des Bandpassfilters hinaus verschoben ist.

Eine Fläche 420 unterhalb einer das normierte Spektrum repräsentierenden Kurve des siebten Diagramms 414 repräsentiert einen Abstandseinstellbereich, innerhalb dessen der Spiegelabstand des optischen Resonators und somit die Resonanzwellenlänge variierbar ist.

Ferner sind beispielhaft vier Punkte P1, P2, P3, P4 eingezeichnet, die gemäß einem Ausführungsbeispiel als Kalibrierungspunkte zur Kalibrierung des Mikrospektrometermonopols verwendet werden. Je nach Ausführungsbeispiel kann die Kalibrierung auch unter Verwendung von weniger oder mehr als vier Kalibrierungspunkten erfolgen.

In Fig. 4 ist das prinzipielle spektrale Verhalten von Subkomponenten des Mikrospektrometermoduls gezeigt. Der Emitter, d. h. eine Lichtquelle des Mikrospektrometermoduls, strahlt breitbandig das entsprechende Spektrum aus und das Target, etwa aus Spectralon, reflektiert die Beleuchtung zum Mikrospektrometermodul, das ferner den Bandpassfilter, den verstellbaren spektralen Filter in Form des optischen Resonators und den Detektor aufweist. In dieser Konfiguration ist der Bandpassfilter so eingestellt, dass nur Wellenlängen einer Ordnung den optischen Resonator erreichen können. Das bedeutet, dass der Wellenlängenmessbereich durch die Ordnung n limitiert ist. Wird der optische Resonator über die Grenze des Bandpassfilters angesteuert, so können die Intensitäten der unterschiedlichen Ordnungen wie n+1 oder n-1 durch den Detektor detektiert werden, da die relevanten Wellenlängen der Ordnung n unterdrückt werden und das Messergebnis nicht verfälschen können. Aufgrund der unterschiedlichen spektralen Emitterleuchtstärke und der Empfindlichkeit des Detektors kann eine Kalibrierung des Mikrospektrometermoduls erforderlich sein. Das normierte Spektrum zeigt beispielsweise das Ergebnis einer konstanten spektralen Empfindlichkeit des Mikrospektrometermoduls, wobei die Kavitätendistanz ein Maß für die Wellenlänge ist und die Intensität ein Maß für die spektrale Absorption des Targets ist.

Somit sollten die Umrechnungsfaktoren zur Umrechnung zwischen Wellenlängen und entsprechenden Kavitätendistanzen sowie die spektralen Intensitäten kalibriert werden.

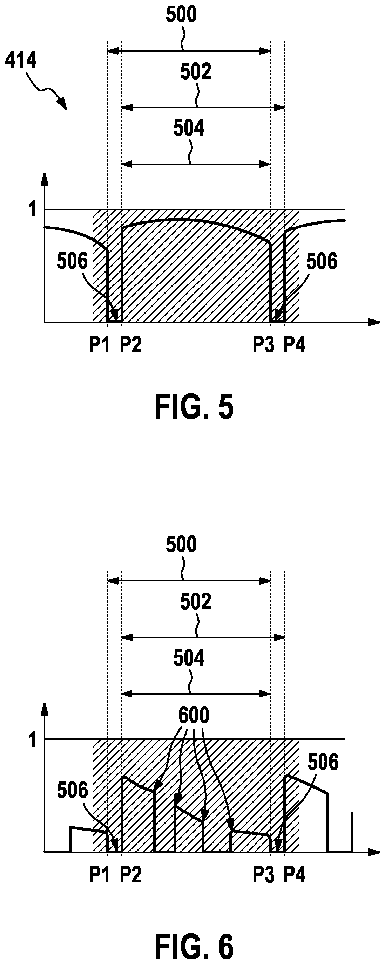

Fig. 5 zeigt ein Diagramm 414 aus Fig. 4 zur Darstellung von Rohspektrumkalibrierungspositionen zur Verwendung in einem Verfahren gemäß einem Ausführungsbeispiel. Gezeigt sind die Punkte P1, P2, P3, P4, die gemäß diesem Ausführungsbeispiel als Rohspektrumkalibrierungspositionen zur Kalibrierung der jeweiligen Wellenlängen- oder Positionssensorverhältnisse zur Minimierung von Wellenlängenverschiebungsfehlern fungieren. Eingezeichnet sind ferner ein erster Abstandsbereich 500 für eine erste Empfindlichkeitskalibrierung, ein zweiter Abstandsbereich 502 für eine zweite Empfindlichkeitskalibrierung sowie ein Messbereich 504 des Mikrospektrometermoduls. Weiterhin sind Dunkelabgleichsmesspunkte 506 zur Kalibrierung des Mikrospektrometermoduls bei Dunkelheit eingezeichnet.

Gemäß einem Ausführungsbeispiel werden temperaturabhängige Abweichungen unter Berücksichtigung einer mittels eines Temperatursensors des Mikrospektrometermoduls ermittelten Temperatur ausgeglichen.

Die Kalibrierung des Abstandssensors des Mikrospektrometermoduls erfolgt beispielsweise bei jeder Messung.

In Fig. 5 sind mögliche Kalibrierungspunkte bezüglich der Wellenlängen-Kavitätendistanzen-Kalibrierung für Offset und Empfindlichkeit gezeigt. Zur Kalibrierung wird der Detektor beispielsweise bezüglich eines Dunkelstroms überprüft, um Abweichungen bezüglich der Intensität auszugleichen. Der Offset und die Empfindlichkeit der Wellenlängen-Kavitätendistanzen-Kalibrierung sind abhängig von der Filterflankenperformance des Bandpassfilters. Die Wellenlängendifferenz unterschiedlicher Wellenlängenordnungen ist physikalisch gegeben, sodass bei geeigneter Flankenwahl eine sehr gute Kalibrierung der Wellenlängen-Kavitätendistanzen-Umrechnung möglich ist.

Zusätzlich zu dem in Fig. 5 gezeigten Verfahren können gemäß Fig. 6 charakteristische Kalibrierungspunkte, etwa aus dem Sonnenspektrum, herangezogen werden, um die Kalibrierung zu überprüfen oder zu verbessern.

Fig. 6 zeigt ein Diagramm zur Darstellung von Rohspektrumkalibrierungspositionen zur Verwendung in einem Verfahren gemäß einem Ausführungsbeispiel, etwa einem vorangehend anhand der Figuren 1 bis 5 beschriebenen Verfahren. Gezeigt sind zusätzliche RohspektrumKalibrierungspositionen 600 in einem Sonnenspektrum oder einem sonstigen Spektrum mit bekannten Absorptionsbanden, die optional zur Kalibrierung der Wellenverschiebung herangezogen werden.

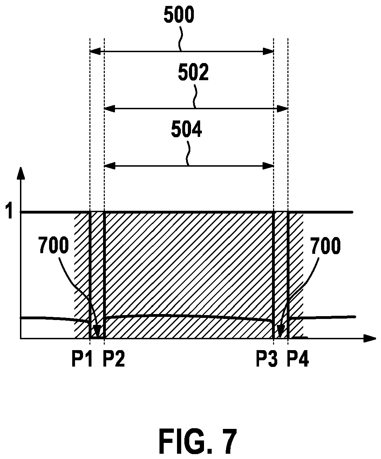

Fig. 7 zeigt ein Diagramm zur Darstellung einer Spektrumskalibrierung in einem vorangehend anhand der Figuren 1 bis 6 beschriebenen Verfahren gemäß einem Ausführungsbeispiel. Gezeigt ist eine Kurve, die eine Spektrumskalibrierung mithilfe einer sauberen Metallfläche, die von dem Mikrospektrometermodul in einer stabilen Position ohne Vorhandensein direkter Reflexionen analysiert wird. Die Metallfläche sollte kein unbekanntes spektrales Verhalten aufweisen. Punkte, an denen jeweils ein Dunkelstrom gemessen wird, sind mit dem Bezugszeichen 700 gekennzeichnet.

In Fig. 7 ist ein Ausführungsbeispiel einer Kalibrierung gezeigt, bei der das Mikrospektrometermodul auf ein Target ohne spektrale Beeinflussung, etwa eine saubere Metallplatte, gelegt wird. Ziel ist eine Messung ohne spektrale Beeinflussung des Targets. Dies wird beispielsweise durch einen optischen Pfad realisiert, bei dem die Glanzreflexion von Metall genutzt wird. Alternativ wird eine Kalibrierung mit Standardmaterialien wie etwa Geschirr, insbesondere aus Porzellan, oder einer Hautoberfläche durchgeführt, wobei das jeweilige spektrale Verhalten bekannt ist. Die Erkennung der Materialien erfolgt beispielsweise über eine Kamera, etwa in Kombination mit einem RGB-Weißabgleich oder mit einem Rohsignal des Mikrospektrometers, sodass der Probe eine definierte Intensitätsverteilung zugeordnet werden kann. Mit diesen Informationen wird das Mikrospektrometermodul kalibriert. Gemäß einem weiteren Ausführungsbeispiel erfolgt die Kalibrierung der Basis einer Messung natürlicher oder künstlicher Lichtquellen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Kalibrieren eines Mikrospektrometermoduls (100), wobei das Mikrospektrometermodul (100) einen optischen Resonator (104) mit einstellbarem Spiegelabstand, einen dem optischen Resonator (104) vorgeschalteten Bandpassfilter (112) und einen Detektor (114) zum Detektieren einer Intensität von von dem optischen Resonator (104) durchgelassenem Licht aufweist, wobei das Verfahren (300) folgende Schritte umfasst:
Ansteuern (310) des optischen Resonators (104), um einen Durchlassbereich (416) des optischen Resonators (104) durch Verändern des Spiegelabstands über zumindest eine Grenze eines Durchlassbereichs (418) des Bandpassfilters (112) hinaus zu verschieben;
Auslesen (320) des Detektors (114) ansprechend auf das Ansteuern (310), um ein Transmissionsspektrum aufzunehmen; und
Auswerten (330) des Transmissionsspektrums unter Verwendung eines Referenzspektrums, um das Mikrospektrometermodul (100) zu kalibrieren
**dadurch gekennzeichnet, dass**
im Schritt des Ansteuerns (310) der Durchlassbereich (418) des Bandpassfilters (112) kleiner oder gleich einem Wellenlängenabstand zwischen zwei unterschiedlichen Ordnungen einer zu detektierenden Resonanzwellenlänge des optischen Resonators (104) ist und/oder der optische Resonator (104) derart angesteuert wird, dass der optische Resonator (104) Resonanzwellenlängen unterschiedlicher Ordnungen durchlässt und wobei im Schritt des Auswertens (320) das Transmissionsspektrum unter Verwendung von zumindest zwei durch das Referenzspektrum vorgegebenen, Filterkanten des Bandpassfilters repräsentierende, Kalibrierungspunkten (P1, P2, P3, P4; 506; 600; 700) ausgewertet wird, wobei der Resonator (104) über den Bandpassbereich hinaus gefahren wird, sodass unterschiedliche Ordnungen detektiert werden.

2. Verfahren (300) gemäß Anspruch 1, bei dem das Mikrospektrometermodul (100) einen Abstandssensor (118) zum Messen des Spiegelabstands aufweist, wobei im Schritt des Auswertens (320) das Transmissionsspektrum unter Verwendung eines von dem Abstandssensor (118) beim Ansteuern (310) gemessenen Spiegelabstands ausgewertet wird.

3. Verfahren (300) gemäß einem der vorangegangenen Ansprüche, bei dem das Mikrospektrometermodul (100) eine Lichtquelle zum Beleuchten eines zu analysierenden Objekts mit Licht in einem Kalibrierungswellenlängenbereich aufweist, wobei im Schritt des Ansteuerns (310) die Lichtquelle angesteuert wird, um das Objekt zu beleuchten, wobei im Schritt des Auswertens (320) das Transmissionsspektrum unter Verwendung des Kalibrierungswellenlängenbereiches ausgewertet wird.

4. Verfahren (300) gemäß einem der vorangegangenen Ansprüche, bei dem im Schritt des Auswertens (320) das Referenzspektrum ein den Durchlassbereich (418) des Bandpassfilters (112) repräsentierendes Spektrum und/oder ein Spektrum mit bekannten Absorptionsbanden, insbesondere ein Sonnenlichtspektrum, und/oder ein bei einer vorangehenden Referenzmessung unter Verwendung eines zu analysierenden Objekts mit bekanntem spektralem Verhalten ermitteltes Spektrum repräsentiert.

5. Verfahren (300) gemäß einem der vorangegangenen Ansprüche, bei dem das Mikrospektrometermodul (100) einen Temperatursensor aufweist, wobei im Schritt des Auswertens (320) das Transmissionsspektrum unter Verwendung einer von dem Temperatursensor beim Ansteuern (310) gemessenen Temperatur ausgewertet wird.

6. Verfahren (300) gemäß einem der vorangegangenen Ansprüche, bei dem im Schritt des Ansteuerns (310) der optische Resonator (104) angesteuert wird, um den Durchlassbereich (416) des optischen Resonators (104) über eine obere Grenze und eine untere Grenze des Durchlassbereichs (418) des Bandpassfilters (112) hinaus zu verschieben.

7. Verfahren (300) gemäß einem der vorangegangenen Ansprüche, mit einem Schritt des Empfangens von Objekterkennungsdaten und/oder Weißabgleichsdaten über eine Schnittstelle zu einer Kamera zum Aufnehmen von Bildern des zu analysierenden Objekts, wobei im Schritt des Auswertens (320) das Transmissionsspektrum unter Verwendung der Objekterkennungsdaten und/oder der Weißabgleichsdaten ausgewertet wird.

8. Vorrichtung (102) mit einer Ansteuereinheit (210), einer Ausleseeinheit (220) und einer Auswerteeinheit (230), die ausgebildet und programmiert sind, um die entsprechenden Schritte des Verfahrens (300) zum Kalibrieren eines Mikrospektrometermoduls (100), wobei das Mikrospektrometermodul (100) einen optischen Resonator (104) mit einstellbarem Spiegelabstand, einen dem optischen Resonator (104) vorgeschalteten Bandpassfilter (112) und einen Detektor (114) zum Detektieren einer Intensität von von dem optischen Resonator (104) durchgelassenem Licht aufweist und wobei ein Durchlassbereich (418) des Bandpassfilters (112) kleiner oder gleich einem Wellenlängenabstand zwischen zwei unterschiedlichen Ordnungen einer zu detektierenden Resonanzwellenlänge des optischen Resonators (104) ist, gemäß einem der vorangegangenen Ansprüche 1 bis 7 auszuführen und/oder anzusteuern.

9. Computerprogramm, das ausgebildet ist, um das Verfahren (300) gemäß einem der Ansprüche 1 bis 7 auszuführen und/oder anzusteuern.

10. Maschinenlesbares Speichermedium, auf dem das Computerprogramm nach Anspruch 9 gespeichert ist.

## Claims

1. Method (300) for calibrating a microspectrometer module (100), wherein the microspectrometer module (100) has an optical resonator (104) with a settable mirror spacing, a bandpass filter (112) connected upstream of the optical resonator (104) and a detector (114) for detecting an intensity of light transmitted by the optical resonator (104), wherein the method (300) comprises the following steps:
controlling (310) the optical resonator (104) to shift a passband (416) of the optical resonator (104) beyond at least one limit of a passband (418) of the bandpass filter (112) by changing the mirror spacing;
reading (320) the detector (114) in reaction to the controlling (310) to record a transmission spectrum; and
evaluating (330) the transmission spectrum using a reference spectrum to calibrate the microspectrometer module (100),
**characterized in that**,
in the controlling step (310), the passband (418) of the bandpass filter (112) is smaller than or equal to a wavelength spacing between two different orders of a resonant wavelength to be detected of the optical resonator (104) and/or the optical resonator (104) is controlled such that the optical resonator (104) transmits resonant wavelengths of different orders and
wherein the transmission spectrum is evaluated in the evaluating step (320) using at least two calibration points (P1, P2, P3, P4; 506; 600; 700) that are specified by the reference spectrum and represent filter edges of the bandpass filter, wherein the resonator (104) is driven beyond the bandpass region, with the result that different orders are detected.

2. Method (300) according to Claim 1, in which the microspectrometer module (100) has a distance sensor (118) for measuring the mirror spacing, wherein the transmission spectrum is evaluated in the evaluating step (320) using a mirror spacing measured by the distance sensor (118) during the controlling (310).

3. Method (300) according to either of the preceding claims, in which the microspectrometer module (100) has a light source for illuminating an object to be analyzed with light in a calibration wavelength range, wherein the light source is controlled in the controlling step (310) to illuminate the object, wherein the transmission spectrum is evaluated in the evaluating step (320) using the calibration wavelength range.

4. Method (300) according to one of the preceding claims, in which, in the evaluating step (320), the reference spectrum represents a spectrum representing the passband (418) of the bandpass filter (112) and/or a spectrum with known absorption bands, in particular a sunlight spectrum, and/or a spectrum ascertained in a preceding reference measurement using an object to be analyzed having a known spectral behaviour.

5. Method (300) according to one of the preceding claims, in which the microspectrometer module (100) has a temperature sensor, wherein the transmission spectrum is evaluated in the evaluating step (320) using a temperature measured by the temperature sensor during the controlling (310).

6. Method (300) according to one of the preceding claims, in which the optical resonator (104) is controlled in the controlling step (310) to shift the passband (416) of the optical resonator (104) beyond an upper limit and a lower limit of the passband (418) of the bandpass filter (112).

7. Method (300) according to one of the preceding claims, having a step of receiving object recognition data and/or white balance data via an interface to a camera for recording images of the object to be analyzed, wherein the transmission spectrum is evaluated in the evaluating step (320) using the object recognition data and/or the white balance data.

8. Apparatus (102) having a control unit (210), a readout unit (220) and an evaluation unit (230), which are embodied and programmed to perform and/or control the corresponding steps of the method (300) for calibrating a microspectrometer module (100), wherein the microspectrometer module (100) has an optical resonator (104) with a settable mirror spacing, a bandpass filter (112) connected upstream of the optical resonator (104) and a detector (114) for detecting an intensity of light transmitted by the optical resonator (104) and wherein a passband (418) of the bandpass filter (112) is smaller than or equal to a wavelength spacing between two different orders of a resonant wavelength to be detected of the optical resonator (104), according to one of the preceding Claims 1 to 7.

9. Computer program designed to perform and/or control the method (300) according to one of Claims 1 to 7.

10. Machine-readable storage medium, on which the computer program according to Claim 9 is stored.

## Revendications

1. Procédé (300) d'étalonnage d'un module de microspectromètre (100), dans lequel le module de microspectromètre (100) comporte un résonateur optique (104) présentant un espacement de miroir réglable, un filtre passe-bande (112) connecté en amont du résonateur optique (104), et un détecteur (114) destiné à détecter une intensité de la lumière transmise par le résonateur optique (104), dans lequel le procédé (300) comprend les étapes suivantes :
la commande (310) du résonateur optique (104) afin de décaler une bande passante (416) du résonateur optique (104) au-delà d'au moins une limite d'une bande passante (418) du filtre passe-bande (112) en modifiant l'espacement de miroir ;
la lecture (320) du détecteur (114) en réponse à la commande (310) afin d'acquérir un spectre de transmission ; et
l'évaluation (330) du spectre de transmission en utilisant un spectre de référence afin d'étalonner le module de microspectromètre (100),
**caractérisé en ce que**,
lors de l'étape de commande (310), la bande passante (418) du filtre passe-bande (112) est inférieure ou égale à un espacement de longueur d'onde entre deux ordres différents d'une longueur d'onde de résonance à détecter du résonateur optique (104) et/ou le résonateur optique (104) est commandé de telle manière que le résonateur optique (104) laisse passer des longueurs d'onde de résonance d'ordres différents et dans lequel, lors de l'étape d'évaluation (320), le spectre de transmission est évalué en utilisant au moins deux points d'étalonnage (P1, P2, P3, P4 ; 506 ; 600 ; 700) qui sont prédéterminés par le spectre de référence et qui représentent des bords de filtre du filtre passe-bande, dans lequel le résonateur (104) est piloté au-delà de la bande passante de manière à ce que différents ordres soient détectés.

2. Procédé (300) selon la revendication 1, dans lequel le module de microspectromètre (100) comporte un capteur d'espacement (118) destiné à mesurer l'espacement de miroir, dans lequel, lors de l'étape d'évaluation (320), le spectre de transmission est évalué en utilisant un espacement de miroir mesuré par le capteur d'espacement (118) lors de la commande (310) .

3. Procédé (300) selon l'une des revendications précédentes, dans lequel le module de microspectromètre (100) comporte une source de lumière destinée à éclairer un objet à analyser avec une lumière se situant dans une plage de longueurs d'onde d'étalonnage, dans lequel, lors de l'étape de commande (310), la source de lumière est commandée afin d'éclairer l'objet, dans lequel, lors de l'étape d'évaluation (320), le spectre de transmission est évalué en utilisant la plage de longueurs d'onde d'étalonnage.

4. Procédé (300) selon l'une des revendications précédentes, dans lequel, lors de l'étape d'évaluation (320), le spectre de référence représente un spectre représentant la plage de transmission (418) du filtre passe-bande (112) et/ou un spectre présentant des bandes d'absorption connues, en particulier un spectre de lumière solaire, et/ou un spectre déterminé lors d'une mesure de référence précédente en utilisant un objet à analyser présentant un comportement spectral connu.

5. Procédé (300) selon l'une des revendications précédentes, dans lequel le module de microspectromètre (100) comporte un capteur de température, dans lequel, lors de l'étape d'évaluation (320), le spectre de transmission est évalué en utilisant une température mesurée par le capteur de température lors de la commande (310).

6. Procédé (300) selon l'une des revendications précédentes, dans lequel, lors de l'étape de commande (310), le résonateur optique (104) est commandé afin de décaler la bande passante (416) du résonateur optique (104) au-delà d'une limite supérieure et d'une limite inférieure de la bande passante (418) du filtre passe-bande (112).

7. Procédé (300) selon l'une des revendications précédentes, comprenant une étape de réception de données de détection d'objet et/ou de données de balance des blancs par l'intermédiaire d'une interface avec une caméra destinée à prendre des images de l'objet à analyser, dans lequel, lors de l'étape d'évaluation (320), le spectre de transmission est évalué en utilisant les données de détection d'objet et/ou les données de balance des blancs.

8. Dispositif (102) comportant une unité de commande (210), une unité de lecture (220) et une unité d'évaluation (230), qui sont conçues et programmées pour exécuter et/ou commander, selon l'une des revendications précédentes 1 à 7, les étapes correspondantes du procédé (300) d'étalonnage d'un module de microspectromètre (100), dans lequel le module de microspectromètre (100) comprend un résonateur optique (104) présentant un espacement de miroir réglable, un filtre passe-bande (112) connecté en amont du résonateur optique (104), et un détecteur (114) destiné à détecter une intensité de la lumière transmise par le résonateur optique (104), et dans lequel une bande passante (418) du filtre passe-bande (112) est inférieure ou égale à un espacement de longueur d'onde entre deux ordres différents d'une longueur d'onde de résonance à détecter du résonateur optique (104).

9. Programme d'ordinateur conçu pour exécuter et/ou commander le procédé (300) selon l'une des revendications 1 à 7.

10. Support de stockage lisible par machine sur lequel est stocké le programme d'ordinateur selon la revendication 9.
